# EUROPÄISCHE PATENTSCHRIFT

(11) **EP 0 869 888 B1**
(45) Veröffentlichungstag und Bekanntmachung des Hinweises auf die Patenterteilung: **16.05.2001**
(21) Anmeldenummer: 97902191.2
(22) Anmeldetag: 20.01.1997
(51) Int. Cl.: B60T 7/08

(54) **FESTSTELLBREMSE FÜR KRAFTFAHRZEUGE, FAHRZEUGANHÄNGER ODER DERGLEICHEN**
PARKING BRAKE FOR MOTOR VEHICLES, VEHICLE TRAILERS OR SIMILAR OBJECTS
FREIN DE STATIONNEMENT POUR VEHICULES A MOTEUR, REMORQUES DE VEHICULES OU SIMILAIRES

(30) Priorität: 20.01.1996 DE 29600996 U
(43) Veröffentlichungstag der Anmeldung: 14.10.1998
(73) Patentinhaber: AL-KO KOBER AG, D-89359 Kötz (DE)
(72) Erfinder: RAMPP, Armin, D-86513 Ursberg (DE); KOBER, Kurt, D-89359 Kötz (DE)
(74) Vertreter: Ernicke, Hans-Dieter, Dipl.-Ing.
(86) Internationale Anmeldenummer: EP9700249
(87) Internationale Veröffentlichungsnummer: WO9726162

(56) Entgegenhaltungen:
- WO-A-95/27642
- DE-A- 4 119 241
- DE-A- 4 336 221

## Beschreibung

Die Erfindung bezieht sich auf eine Feststellbremse für Kraftfahrzeuge, Fahrzeuganhänger oder dergleichen mit den Merkmalen im Oberbegriff des Hauptanspruchs.

Eine solche Feststellbremse ist aus der WO 95/27642 bekannt. Sie besitzt ein Klemmgesperre, das den Handbremshebel mit dem Seilzug lösbar verbindet. Das Klemmgesperre hat einen mit dem Handbremshebel verbundenen hohlkastenförmigen Schieber, in dem eine mit dem Seilzug verbundene und mit einer Verzahnung versehenen Zugstange und zwei ebenfalls mit einer Verzahnung ausgerüstete Klemmstücke angeordnet sind. Die Klemmstücke sind an der Zugstange und im Schieber geführt. Sie besitzen an der dem Zugseil abgekehrten Seite keilförmige Erweiterungen, die mit passenden Keilflächen des Schiebers zusammenwirken. Eine Verstellung des Schiebers zum Anziehen der Bremse führt somit über die Keilflächen zu einer Mitnahme der Klemmstücke, welche aus einem elastischen Material bestehen und dadurch federnd in den Eingriff mit der Verzahnung der Zugstange gebracht werden.

Es ist Aufgabe der vorliegenden Erfindung, eine verbesserte Ausführung der Feststellbremse und des Klemmgesperres aufzuzeigen.

Die Erfindung löst diese Aufgabe mit den Merkmalen des Hauptanspruchs.

Die erfindungsgemäße Feststellbremse erlaubt es, den Eingriff der Verzahnung und Gegenverzahnung von Zugstange und Klemmstück unabhängig vom Zustand der Bremse und von Witterungseinflüssen sicherzustellen und insbesondere geometrische Überbestimmungen zu vermeiden. Weiterhin bietet sie bessere Möglichkeiten, um das Lösen des Klemmgesperres ohne Beeinträchtigung durch den Zustand der Bremse bzw. durch Witterungseinflüsse sicherzustellen.

Die Zugstange weist an einer Randfläche eine Verzahnung auf und ist an der gegenüberliegenden Seite am Schieber geführt. Dadurch wird beim Eingriff des Klemmstückes in die Verzahnung der Zugstange ein ordentlicher Widerstand auf die Zugstange ausgeübt. Dies erhöht die Betriebssicherheit der Bremse.

Bei der Erfindung ist das Klemmstück nur noch am Schieber schwimmend gelagert und kann sich quer zur Zugstange bewegen. Dies hat verschiedenen Vorteile. Zum einen kann die Zugstange nachträglich montiert und in den Schieber mit dem daran gehaltenen Klemmstück gesteckt werden. Ferner kann das Klemmstück aus Metall bestehen und biegefest sein. Es hat dadurch eine höhere Festigkeit als das vorbekannte elastische Klemmelement aus Kunststoff. Dies ist insbesondere für die Festigkeit und den Verschleiß der Verzahnung vorteilhaft.

Vorzugsweise erstreckt sich die Gegenverzahnung nicht über die gesamte Länge des Klemmstückes sondern nur in den Bereich welcher der Keilfläche der keilförmigen Wandverdickung des Klemmstückes gegenüberliegen. Diese partielle Gegenverzahnung steht gegenüber der angrenzenden Fläche des Steges des Klemmstückes vor. Daraus folgt, daß bei Eingriff der Gegenverzahnung des Klemmstückes in die Verzahnung der Zugstange noch ein Spiel zwischen den unbeteiligten Zahnspitzen der Zahnstange und der gegenüberliegenden Stegfläche des Klemmstückes vorhanden ist.

Das erfindungsgemäße Klemmgesperre hat eine Lösevorrichtung, die das Klemmstück in Lösestellung der Bremse von der Zugstange automatisch wegbewegt und den Verzahnungseingriff löst. Sie übt dabei unter Mitwirkung einer Feder am Schieber ein Kippmoment auf das Klemmstück aus und schwenkt es von der Zahnstange weg. Hierfür ist es günstig, die Verzahnung weitgehend nur am Kopf des Klemmstück anzuordnen. Außerdem liegt das Klemmstück dadurch mit seiner Keilfläche im wesentlichen ständig an der Gegenkeilfläche des Schiebers an und ist in seiner Lage bestimmt.

Die Erfindung zeigt auch eine alternative Lösung des technischen Problems offenbart, bei dem das Klemmstück nicht mehr als Schiebeteil sondern als Winkelhebel ausgebildet ist. Dieser Winkelhebel ist im Bereiche des Übergangs seiner Schenkel am Schieber drehbar gelagert. Der eine Schenkel erstreckt sich parallel zur Zugstange und weist an seinem freien Ende eine Gegenverzahnung auf, die unter Federkraft in die Verzahnung der Zugstange gedrückt wird. Der andere Schenkel ist hingegen dazu bestimmt, gegen den ortsfesten Anschlag zu treffen, was dazu führt, daß die Gegenverzahnung mit Sicherheit aus dem Eingriff mit der Verzahnung der Zugstange gelangt.

Um auch in diesem Ausführungsbeispiel Überbestimmungen zu vermeiden und ein sicheres Eingreifen der Verzahnungen sicherzustellen, ist der Winkelhebel über ein Langloch an einem mit dem Schieber verbundenen Lagerbolzen gelagert, wobei sich das Langloch parallel zur Zugstange erstreckt. Wenn sich also beim Schließen der Bremse die Zähne der Verzahnung bzw. Gegenverzahnung deckungsgleich gegenüberliegen und die Gefahr besteht, daß die Verzahnung nicht ordnungsgemäß in Eingriff kommen kann, dann erfolgt die über die Langloch-Lagerung eine Ausweichbewegung des Winkelhebels, mit der Folge, daß die Verzahnungen in jedem Falle sicher in Eingriff gelangen können.

Damit die in Eingriff gekommenen Verzahnungen beim Verstellen des Handbremshebels sich nicht ungewollt lösen können, sind an dem die Gegenverzahnungen tragenden Schenkelende des Winkelhebels und dem angrenzenden Bereich des Schiebers aneinanderliegende keil- oder pfannenförmige Flächen vorhanden, deren Neigung so gerichtet ist, daß eine den Eingriff der Verzahnungen unterstützende Kraftkomponente beim Anziehen des Handbremshebels entsteht.

Es erweist sich vorteilhaft, die Schenkel des Winkelhebels an der Außenfläche des Schiebers anzuordnen und zu lagern. Demgemäß sind die aufrechten Schenkelenden untereinander mit einem den Schieber überbrückenden Steg verbunden, welcher die Gegenverzahnung trägt und von den Druckfedern in Richtung zur Verzahnung der Zugstange belastet ist.

Die Erfindung ist in den Zeichnungen schematisch und beispielsweise dargestellt. Es zeigen:
- Figur 1:: eine Vorderansicht eines Klemmgesperres mit Schieber, Klemmstück und Zugstange,
- Figur 2:: einen Längsschnitt durch das Klemmgesperre nach der Linie II-II gemäß Figur 1,
- Figur 3:: einen Querschnitt durch die Zugstange gemäß Linie III-III in Figur 2,
- Figur 4 und 5:: verschiedene Betriebsstellungen des Klemmgesperres gemäß Figur 2
- Figur 6:: eine Seitenansicht einer Variante des Klemmgesperres,
- Figur 7:: einen Querschnitt durch die Zustange entlang der Linie V-V in Figur 6,
- Figur 8:: einen Teilquerschnitt in vergrößerter Darstellung durch den Eingriffsbereich von Verzahnung und Gegenverzahnung der Zugstange und des Winkelhebels,
- Figur 9:: eine im Detail vergrößerte Variante des Klemmgesperres von Figur 1 bis 5,
- Figur 10 und 11:: die Feststellbremse in einer Übersichtsdarstellung in Seitenansicht und Draufsicht.

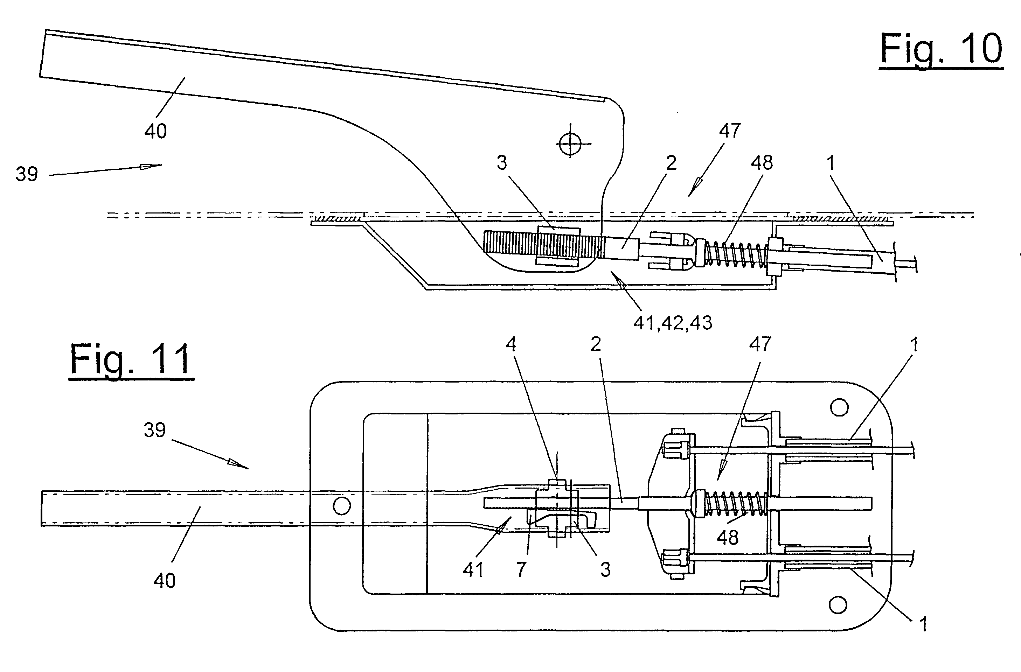

Figur 10 und 11 zeigen eine Feststellbremse (39) in der Übersicht. Die Feststellbremse (39) besitzt einen Handbremshebel (40), der mittels eines beweglichen Klemmgesperres (41) mit ein oder mehreren zu den Radbremsen (nicht dargestellt) führenden Seilzügen (1) lösbar verbunden ist. Beim Anziehen verbindet das Klemmgesperre (41) den Handbremshebel (40) fest mit dem oder den Seilzügen (1) und überträgt die Spannkräfte. In Lösestellung des Handbremshebel (40) hebt das Klemmgesperre (41) diese Verbindung wieder auf. Die Feststellbremse (39) kann auch eine Seilzugverstellung (47) zur Beseitigung des Spiels in dem oder den Seilzügen (1) aufweisen. Sie ist in Lösestellung des Handbremshebels (40) wirksam.

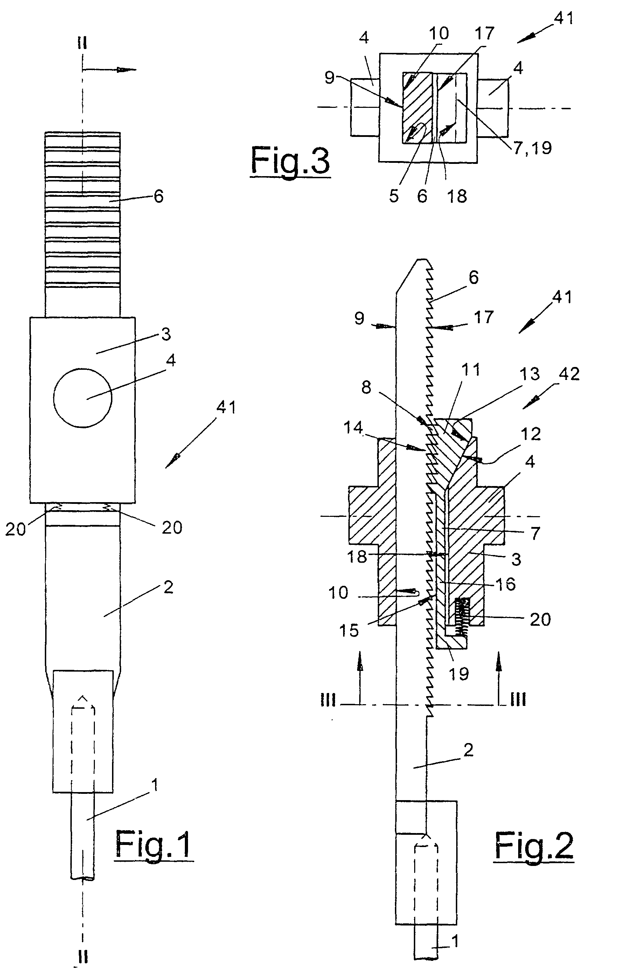

Das Klemmgesperre (41) besitzt einen Schieber (3), vorzugsweise nur ein Klemmstück (7) und ein Zugelement (2), das mit dem Seilzug (1) verbunden ist. Der Schieber (3) ist mit dem Handbremshebel (40) über ein außenseitiges Lager (4), z.B. ein Zapfenlager (4), beweglich verbunden. Der Seilzug (1) endet in dem Zugelement (2), das vorzugsweise als Zugstange (2) ausgebildet ist und durch den Schieber (3) geführt ist. Der Schieber (3) ist als Klemmgehäuse ausgebildet und weist einen durchgehenden, im Querschnitt prismatischen Hohlraum (5) auf (vgl. Figur 3), der zur Führung der Zugstange (2) und des Klemmstückes (7) bestimmt ist.

Das Klemmstück (7) ist am Schieber (3) schwimmend gelagert und im Hohlraum (5) quer und längs zur Zugstange (2) beweglich geführt. In Axialrichtung kann sich das Klemmstück (7) im Schieber (3) mit begrenztem Spiel vor und zurück bewegen. Das Klemmstück (7) umgreift in etwa U-förmig die eine Innenwand (18) des Schiebers (3).

Das Klemmstück (7) wird durch eine Anstellvorrichtung (42) beim Anziehen der Feststellbremse (39) zur Zugstange (2) hinbewegt und mit dieser in Eingriff gebracht. Durch eine Lösevorrichtung (43) wird das Klemmstück (7) beim Lösen der Feststellbremse (39) von der Zugstange (2) wieder entfernt. Die Innenweite des Hohlraums (5) ist entsprechend groß bemessen, um diese Querbewegungen zu ermöglichen.

Das Klemmstück (7) und die anderen Teile des Klemmgesperres (41) können aus Metall, insbesondere Stahl oder Sintermetall, bestehen. Das Klemmstück (7) kann als steifes und wenig biegsames Bauteil ausgebildet sein.

Wie besonders die Figur 2 zeigt, weist die im Querschnitt prismatische Zugstange (2) vorzugsweise an nur einer Seite eine Verzahnung (6) auf, die z.B. als Sägeverzahnung ausgebildet ist. Die Sägeverzahnung hat unterschiedliche Flankenwinkel, wobei die steileren und im wesentlichen senkrechten Flanken zum Seilzug (1) weisen und die flacheren Flanken in die Gegenrichtung zeigen. In diese Verzahnung (6) soll eine Gegenverzahnung (8) eingreifen, die am Klemmstück (7) angebracht ist.

Das Klemmstück (7) weist an seinem dem Seilzug (1) abgekehrten Ende eine keilförmige Wandverdickung (11) auf, deren nach außen gerichtete Keilfläche (12) mit einer passenden Gegenkeilfläche (13) an der benachbarten Innenwand des Schiebers (3) zusammenwirkt. Diese Keilanordnung bildet die Anstellvorrichtung (42). Wenn der Schieber (3) beim Anziehen des Handbremshebels (40) vom Seilzug (1) weg nach vorn bewegt wird, drückt er über die Keilanordnung das Klemmstück (7) zur Seite und bewegt es zur Zugstange (2) hin. Dabei greifen die Verzahnungen (6,8) ineinander und stellen eine formschlüssige Verbindung zwischen dem Schieber (3) mit dem darin geführten Klemmstück (7) und der Zugstange (2) und dem Seilzug (1) her. Das Klemmgesperre (41) ist geschlossen und überträgt die Bewegungen und Kräfte des Handbremshebels (40) auf den oder die Seilzüge (1).

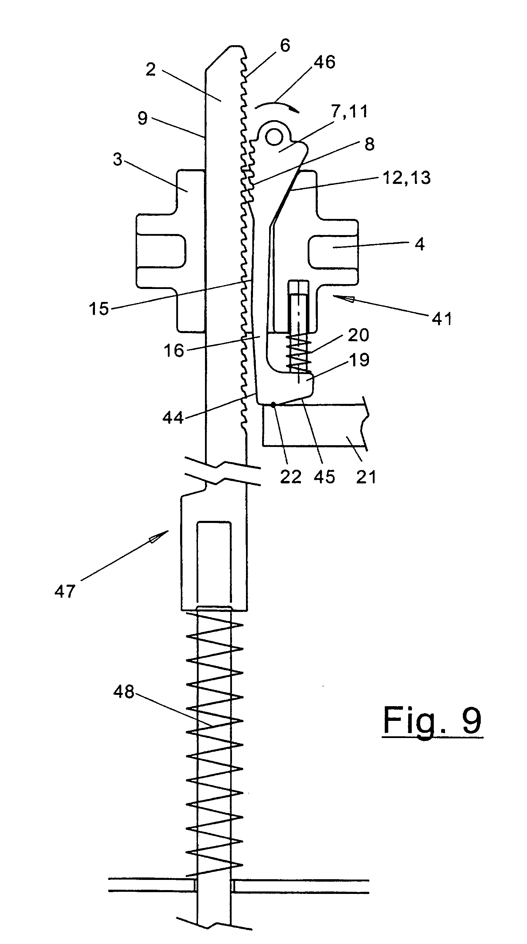

Die Gegenverzahnung (8) ist bei diesem Ausführungsbeispiel nur im Bereich der Wandverdickung (11) angeordnet. Sie steht gegenüber dem angrenzenden Wandbereich (15) des Steges (16) des Klemmstückes (7) ein wenig vor. Dies bedeutet, daß der Wandbereich (15) des Steges (16) einen kleinen Abstand gegenüber den Zahnspitzen (17) der Verzahnung (6) aufweist, wenn die Gegenverzahnung des Klemmstückes (7) im Eingriff mit der Verzahnung (6) der Zugstange (2) steht. Dem Wandbereich (15) kann am unteren dem Seilzug (1) zugewandten Ende eine Anschrägung (44) aufweisen. An der glatten Innenwand (18) des Schiebers (3) kann der Steg (16) im Lösezustand der Haltebremse gegebenenfalls zur Anlage kommen. Figur 9 zeigt diese Ausbildung.

Die der Verzahnung (6) gegenüberliegende rückwärtige Seite oder Randfläche (9) der Zugstange (2) ist eben ausgebildet und liegt an der gleichfalls ebenen Innenfläche (10) des Schiebers (3) an, wodurch eine genaue Führung und Lageorientierung der Zugstange (2) im Hohlraum (5) sichergestellt ist. Dadurch kann beim Anziehen der Feststellbremse (39) der Zahneingriff (6,8) unabhängig von Verschleiß und anderen Betriebsbeeinträchtigungen der Feststellbremse (39) und der Radbremse gesichert werden.

Das Klemmstück (7) weist an seinem dem Seilzug (1) zugekehrten Ende einen winkelförmigen Ansatz (19) auf, der den Schieber (3) rückseitig hintergreift. Gegen den Ansatz (19) sind eine oder mehrere Druckfedern (20) angestellt, die in einer Sackbohrung an der Rückseite des Schiebers (3) mit Abstand von der Zugstange angeordnet sind und sich längs der Zugstange (2) erstrecken. Diese Druckfedern (20) drücken das Klemmstück (7) in Richtung zum Seilzug (1) und sorgen dafür, daß die Keilflächen (12,13) des Klemmstückes (7) und des Schiebers (3) aneinander liegen.

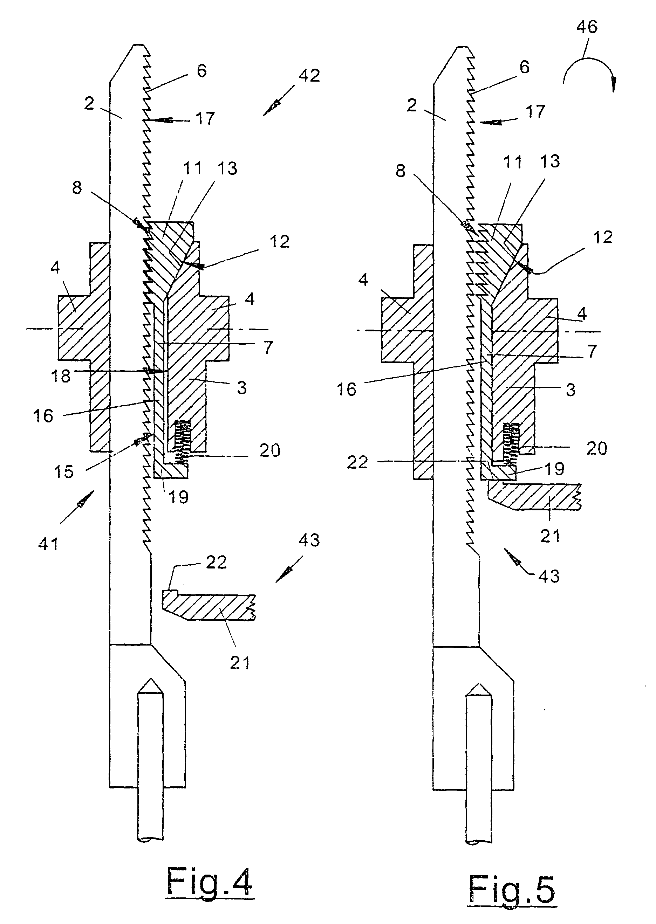

Die Feststellbremse (39) besitzt einen ortsfesten Anschlag (21), an dem das Klemmstück (7) mit seinem Ansatz (19) in Lösestellung der Bremse (39) anliegt und die Druckfeder(n) (20) spannt. Der Anschlag (21) kann gemäß Figur 4 und 5 eine Erhebung aufweisen oder gemäß Figur 9 eben sein.

Die Funktion des Klemmgesperres (41) ergibt sich aus den Figuren 4 und 5.
Figur 4 zeigt die Eingriffsstellung der Verzahnung (6) und Gegenverzahnung (8) im angezogenen Zustand der Bremse (39). Man sieht, daß der winkelförmige Ansatz (19) des Klemmstückes (7) in Distanz zu dem ortsfesten Anschlag (21) steht. In der angezogenen Stellung ist der Schieber (3) mit der Zugstange (6) in der Zeichnung nach oben verstellt. Die sich entspannenden Druckfedern (20) schieben den Ansatz (19) nach unten weg in Richtung zum Seilzug (1). Das Klemmstück (7) gleitet an den Keilflächen (12,13) entlang nach unten und bewegt sich dabei gleichzeitig zur Seite und zur Zugstange (2) hin. Man erkennt dies in Figur 4 durch die Distanzierung des Stegs (16) gegenüber der Innenwand (18) des Schiebers (3). Die Verzahnungen (6,8) geraten im Bereich der Wandverdickung (11) in Eingriff. Der an die Gegenverzahnung (8) anschließende Wandbereich (15) des Steges (16) weist gegenüber den Zahnspitzen (17) der Verzahnung (6) einen kleinen Abstand auf, der in der Zeichnung nicht besonders dargestellt ist.

Wenn nun die Bremse (39) gelöst werden soll, wird der Schieber (3) durch den Handbremshebel (40) in Richtung zum ortsfesten Anschlag (21) (in der Zeichnung der Figur 5 nach unten) bewegt. Dabei tritt die Lösevorrichtung (43) in Funktion. Sie bewegt das Klemmstück (7) von der Zugstange (2) weg und hebt den Eingriff der Verzahnungen (6,8) auf. Figur 4,5 und Figur 9 zeigen zwei Varianten der Lösevorrichtung.

Im Ausführungsbeispiel von Figur 4 und 5 trifft der winkelförmige Ansatz (19) gegen eine Anschlagstelle (22) auf einer Erhebung des ortsfesten Anschlages (21). Die Anschlagstelle (22) bildet einen Drehpunkt für das schwimmend gelagerte Klemmstück (7). Hierbei ist von Bedeutung, daß die Anschlagstelle (22) zwischen der weiter außen liegenden Wirkungsachse der Druckfedern (20) und der Zugstange (2) liegt. Damit ergibt sich beim Auftreffen des Ansatzes (19) an der Anschlagstelle (22) ein in der Zeichnung rechtsdrehendes Kippmoment (46). Einerseits wird durch dieses Auftreffen das Klemmstück (7) in Axialrichtung entgegengesetzt zum Seilzug (1) verschoben und andererseits nach rechts gedreht. Durch das Kippmoment (46) gelangt die Gegenverzahnung (8) des Klemmstückes (7) aus dem Eingriff mit der Verzahnung (6) der Zugstange (2). Die Keilflächen (12,13) bleiben im Eingriff. Insgesamt wird dadurch das Klemmstück (7) quer von der Zugstange (2) wegbewegt, bis gegebenenfalls der Steg (16) an der Innenwand (18) des Schiebers (3) zur Anlage kommt. Figur 5 zeigt demgemäß die Lösestellung der Feststellbremse, die zur Folge hat, daß der von der Radbremse angezogene Seilzug (1) in der Zeichnung der Figur 5 mit der Zugstange (2) nach unten bewegt wird.

In der Variante von Figur 9 ist der Anschlag (21) an der Oberseite eben und endet vorzugsweise vor dem Wandbereich (15) des Klemmstücks (7). Der Ansatz (19) hat an seinem der Druckfeder (20) zugekehrten Ende an der Unterseite eine hochlaufende Anschrägung (45). Der Ansatz (19) kann dadurch auf dem Anschlag (21) an der Anschlagstelle (22) unter der Kraft der seitlich versetzten Druckfeder (20) kippen. Die Kontaktfläche am Ansatz (19) kann dabei auch gerundet sein. Es entsteht wiederum das Kippmoment (46), das das Klemmstück (7) zur Seite bewegt.

In beiden Fällen kann der ortsfeste Anschlag (21) soweit rückversetzt sein, daß die Druckfeder (20) nicht auf Block gepreßt wird und der Ansatz (19) nicht in Kontakt mit der Rückseite des Schiebers (3) gelangt. Die Federwirkung und das Kippmoment (46) bleiben dadurch in Lösestellung der Bremse (39) stets erhalten.

Die Erfindung erlaubt eine Selbsteinstellung der Feststellbremse (39) unabhängig vom Betriebszustand der Radbremse oder von Witterungseinflüssen. Dies hängt damit zusammen, daß das Klemmstück (7) ständig unter dem Einfluß der Druckfedern (20) steht und damit in der Lage ist, durch eine geringe Längsbewegung entlang der Innenwand (18) des Schiebers (3) sich so einzustellen, daß für den Anzug des Handbremshebels mit Sicherheit die Verzahnungen (6,8) in Eingriff kommen.

In Lösestellung der Feststellbremse (39) kann außerdem die Seilzugverstellung (47) in Funktion treten. Sie besitzt an geeigneter Stelle eine Feder (48), die am einen Ende ortsfest gehalten und andererseits mit der Zugstange (2) direkt oder mittelbar verbunden ist. Der Seilzug (1) ist vorzugsweise als Bowdenzug ausgebildet. Er besitzt eine mit der Zugstange (2) verbundene Seele und einen ortsfest abgestützten Mantel. Bei gelöstem Klemmgesperre (41) schiebt oder zieht die Feder (48) die Zugstange (2) durch den Schieber und strafft dadurch die Seele des Seilzugs (1) gegenüber dem Mantel. Dadurch wird das Spiel im Seilzug (1) in Lösestellung der Bremse (39) automatisch beseitigt.

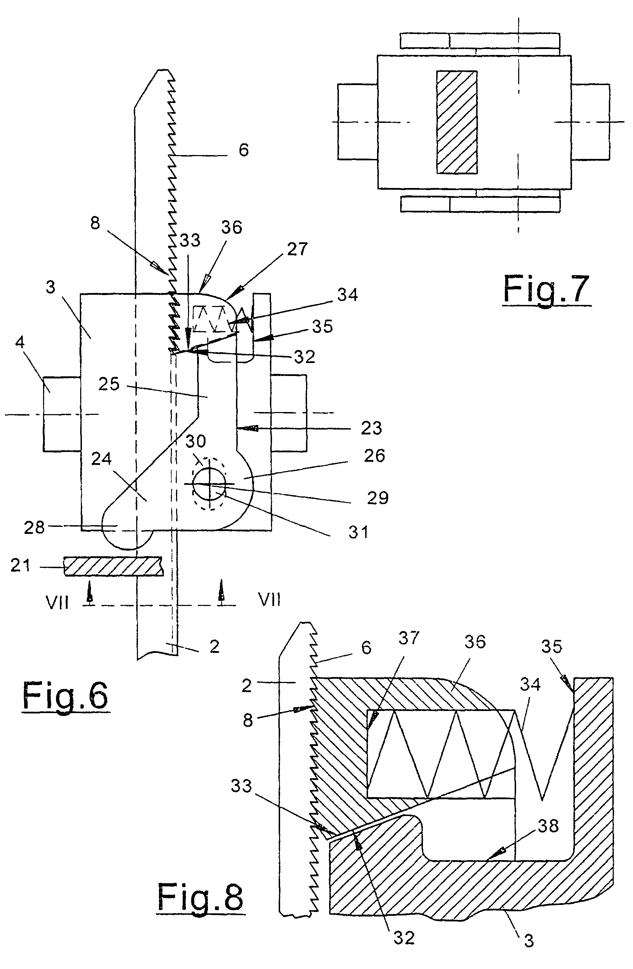

In den Figuren 6 bis 8 ist eine alternative Lösungsform der Erfindung. Dort hat das Klemmstück (7) der Figuren 1 bis 5 die Form eines Winkelhebels (23), der am Schieber (3) drehbar gelagert ist. Ein in der Zeichnung der Figur 6 aufrechter Schenkel (25) geht an seinem freien Schenkelende (27) in einem in Richtung zur Zugstange (2) vorstehenden Steg (36) über, der an seiner freien Fläche die Gegenverzahnung (8) aufweist. Dieser Schenkel (25) mit seinem Steg (36) steht unter der Wirkung einer oder mehrerer Druckfedern (34), die sich an einer aufrechten Wandfläche (35) des Schiebers (3) abstützt und ihre Wirkung quer zur Verzahnung (6) entwickelt.

Der andere Schenkel (24) des Winkelhebels (23) weist an seinem freien Schenkelende (28) eine nockenartige Ausbildung auf, die dazu bestimmt ist, gegen den ortsfesten Anschlag (21) zu treffen, wenn die Bremswirkung der Feststellbremse aufgehoben werden soll.

Im Übergang (26) zwischen den beiden Schenkeln (24,25) des Winkelhebels (23) befindet sich die Drehachse (29), die durch einen Lagerbolzen (31) gebildet ist, an dem der Winkelhebel (23) über ein Langloch (30) geführt ist. Dieses Langloch (30) erstreckt sich parallel zur Zugstange (2) .

Wie besonders auch Figur 7 zeigt, ist der Winkelhebel (23) gabelförmig ausgebildet und an den Außenflächen des Schiebers (3) gelagert. Die aufrechten Schenkel (25) sind über den Steg (36) miteinander verbunden, welcher in einer Aussparung (38) (vgl. Figur 8) des Schiebers (3) angeordnet ist und den Schieber (3) überbrückt.

Der Steg (36) des Winkelhebels (23) weist an seiner der Drehachse (29) zugekehrten Seite eine Keilfläche (32) auf, die gegen eine passende Keilfläche (33) des Schiebers (3) wirkt. Die Neigung dieser Keilflächen (32,33) ist so gewählt, daß beim Auftreffen die Keilfläche (33) gegen die Keilfläche (32) eine Andrücktendenz der Gegenverzahnung (8) gegen die Verzahnung (6) der Zugstange (2) entsteht.

Auch diese Ausführungsform der Erfindung ermöglicht die spielfreie Einstellung der Bremse und Selbsteinstellung der Verzahnungen (6,8), wenn die Zahnspitzen aufeinandertreffen sollten. Dies wird durch das Langloch (30) erreicht, durch welches der Winkelhebel (23) die Möglichkeit hat, sich parallel zur Zugstange (2) soweit zu verschieben, bis die Gegenverzahnung (8) vollständig in die Verzahnung (6) der Zugstange (2) eingreift.

In Figur 8 ist in vergrößerter Darstellung der Ausschnitt, betreffend den Steg (36) mit seiner Gegenverzahnung (8) und die Keilflächen (32,33) dargestellt. Man sieht, daß die Gegenverzahnung (8) wirksam aus dem Eingriff mit der Verzahnung (6) der Zugstange (2) gelangen kann, wenn der Winkelhebel (23) im Uhrzeigersinn verdreht wird. Diese Verdrehung entsteht durch das Auftreffen des Schenkelendes (28) gegen den ortsfesten Anschlag (21). Zu diesem Zweck ist ein verhältnismäßig großer Hebelarm des Schenkels (24), bezogen auf die Drehachse (29), zweckmäßig. Die Erfindung ist nicht auf die beiden Ausführungsbeispiele beschränkt, sondern erstreckt sich auf alle weiteren Ausführungsformen, welche die Aufgabe der Erfindung mit gleichwirkenden Mitteln lösen. Im besonderen ist dabei darauf Wert zu legen, daß das Klemmelement bzw. der Winkelhebel, welche die Gegenverzahnung (8) aufweisen, relativ zum Schieber (3) beweglich sind, um ein sicheres Eingreifen der Verzahnungen (6,8) zu ermöglichen.

Abwandlungen der beschriebenen Ausführungsbeispiele sind in verschiedener Weise möglich. Das Verzahnung (6,8) kann ein beliebiges anderes geeignetes form- und/oder kraftschlüssiges Rastgesperre beinhalten, z.B. ein Wellenprofil. Ferner kann die Ausbildung, Kinematik und Zuordnung der Teile des Klemmgesperres variiert werden, indem z.B. das Zugelement mit dem Handbremshebel und der Schieber mit dem Seilzug verbunden ist. An die Stelle des Handbremshebels kann ein anderes Betätigungsorgan treten.

Abwandlungen sind auch hinsichtlich der Anstell- und Lösevorrichtung (42,43) möglich. Die Zugstange (2) kann ferner mehrere Verzahnungen mit jeweils gegenüberliegenden glatten Führungsflächen aufweisen. Die Verzahnungen sind dann über Eck angeordnet. Außerdem ist eine entsprechende Zahl von Klemmstücken vorhanden.

### BEZUGSZEICHENLISTE

- 1: Seilzug
- 2: Zugelement, Zugstange
- 3: Schieber, Klemmgehäuse
- 4: Lager, Zapfen
- 5: Hohlraum
- 6: Rastgesperre, Verzahnung
- 7: Klemmstück
- 8: Rastgesperre, Gegenverzahnung
- 9: Randfläche
- 10: Innenfläche
- 11: Wandverdickung
- 12: Keilfläche
- 13: Gegenkeilfläche
- 14: Randbereich
- 15: Wandbereich
- 16: Steg
- 17: Zahnspitze
- 18: Innenwand
- 19: winkelförmiger Ansatz
- 20: Druckfeder
- 21: ortsfester Anschlag
- 22: Anschlagstelle
- 23: Winkelhebel
- 24: Schenkel
- 25: Schenkel
- 26: Übergang
- 27: Schenkelende
- 28: Schenkelende
- 29: Drehachse
- 30: Langloch
- 31: Lagerbolzen
- 32: Keilfläche
- 33: Keilfläche
- 34: Druckfeder
- 35: Wandfläche
- 36: Steg
- 37: Sackloch
- 38: Aussparung
- 39: Feststellbremse
- 40: Handbremshebel
- 41: lösbare Verbindung, Klemmgesperre
- 42: Anstellvorrichtung
- 43: Lösevorrichtung
- 44: Anschrägung
- 45: Anschrägung
- 46: Kippmoment
- 47: Seilzugverstellung
- 48: Feder

## Patentansprüche

1. Feststellbremse für Kraftfahrzeuge, Fahrzeuganhänger oder dergleichen mit einem lösbaren Klemmgesperre (41) zur Übertragung der Verstellkraft des Handbremshebels (40) auf mindestens einen zur Radbremse führenden Seilzug (1), wobei das Klemmgesperre (41) einen Schieber (3), ein Zugelement (2) mit Verzahnung (6) und ein längsbewegliches Klemmelement (7) mit Gegenverzahnung (8) aufweist, wobei eine Anstellvorrichtung (42) die Verzahnungen (6,8) beim Anziehen des Handbremshebels (40) in Eingriff bringt, dadurch **gekennzeichnet,** dass das Zugelement (2) zumindest an einer Seite eine mit einem Klemmelement (7) zusammenwirkende Verzahnung (6) und an der gegenüberliegenden Seite (9) eine ebene Wandung aufweist, mit der sie an der zugekehrten Innenfläche (10) des Schiebers (3) geführt ist.

2. Feststellbremse nach Anspruch 1, dadurch **gekennzeichnet,** dass das Klemmelement (7) am Schieber (3) geführt und längs- sowie querbeweglich gelagert ist.

3. Feststellbremse nach Anspruch 1 oder 2, dadurch **gekennzeichnet,** dass das Klemmgesperre (41) eine Lösevorrichtung (43) aufweist, die das Klemmelement (7) vom Zugelement (2) entfernt.

4. Feststellbremse nach Anspruch 1, 2 oder 3, dadurch **gekennzeichnet,** dass das Klemmelement (7) eine keilförmige Wandverdickung (11) aufweist, deren Keilfläche (12) an einer passenden Gegenkeilfläche (13) des Schiebers (3) anliegt, wobei die Gegenverzahnung (8) des Klemmelementes (7) in dem von der Keilfläche (12) abgekehrten Randbereich (14) angeordnet ist.

5. Feststellbremse nach Anspruch 4, dadurch **gekennzeichnet,** dass die Gegenverzahnung (8) des Klemmelementes (7) über den angrenzenden Wandbereich (15) vorsteht.

6. Feststellbremse nach einem der Ansprüche 1 bis 5, dadurch **gekennzeichnet,** dass der Steg (16) des Klemmelement (7) an seinem dem Seilzug (1) zugekehrten Ende einen winkelförmigen Ansatz (19) aufweist, der den Schieber (3) hintergreift.

7. Feststellbremse nach Anspruch 6, dadurch **gekennzeichnet,** dass am Schieber (3) mindestens eine Druckfeder (20) mit einer parallel zum stangenförmigen Zugelement (2) gerichteten Wirkungsachse angeordnet ist, die auf den Ansatz (19) einwirkt.

8. Feststellbremse nach einem der Ansprüche 1 bis 7, dadurch **gekennzeichnet,** dass die Feststellbremse (39) einen ortsfesten Anschlag (21) aufweist, an das Klemmelement (7) in Lösestellung der Bremse anschlägt, wobei die Anschlagstelle (22) zwischen dem Zugelement (2) und der Druckfeder (20) angeordnet ist.

9. Feststellbremse nach Anspruch 8, dadurch **gekennzeichnet,** dass der ortsfeste Anschlag (21) eine Erhebung und/oder der Ansatz (19) eine Anschrägung (45) aufweist.

10. Feststellbremse nach einem der Ansprüche 1 bis 9, dadurch **gekennzeichnet,** dass das Klemmelement (7) aus Metall, insbesondere Sintermetall, besteht.

11. Feststellbremse insbesondere nach Anspruch 1 oder einem der folgenden, dadurch **gekennzeichnet,** dass das Klemmelement (7) als Winkelhebel (23) ausgebildet ist, der im Bereich des Überganges (26) seiner Schenkel (24,25) im Schieber (3) schwenkbar gelagert ist, wobei dessen eines, dem Seilzug (1) abgekehrtes Schenkelende (27) eine in Richtung zur Verzahnung (6) des Zugelements (2) vorstehen Gegenverzahnung (8) aufweist und dessen anderes Schenkelende (28) über den Schieber (3) vorsteht und mit dem ortsfesten Anschlag (21) in einer zur Drehachse (29) des Winkelhebels (23) distanzierten Lage zusammenwirkt.

12. Feststellbremse nach Anspruch 11, dadurch **gekennzeichnet,** dass der Winkelhebel (23) über ein Langloch (30) an einem mit dem Schieber (3) verbundenen Lagerbolzen (31) gelagert ist, wobei sich das Langloch (30) parallel zum Zugelement (2) erstreckt.

13. Feststellbremse nach einem der Ansprüche 11 und 12, dadurch **gekennzeichnet,** dass das die Gegenverzahnung (8) tragende Schenkelende (27) und der angrenzende Bereich des Schiebers (3) aneinanderliegende keil- oder pfannenförmige Flächen (32,33) aufweisen, deren Neigung so gerichtet ist, dass eine den Eingriff der Verzahnungen (6,8) unterstützende Kraftkomponente beim Anziehen des Handbremshebels entsteht.

14. Feststellbremse nach einem der Ansprüche 11 bis 13, dadurch **gekennzeichnet,** dass das die Gegenverzahnung (8) tragende Schenkelende (27) sich über mindestens eine Druckfeder (34) gegen eine davon distanzierte Wandfläche (35) des Schiebers (3) abstützt.

15. Feststellbremse nach einem der Ansprüche 11 bis 14, dadurch **gekennzeichnet,** dass der Winkelhebel (23) gabelförmig ausgebildet ist, dessen Schenkel (24,25) an der Außenseite des Schiebers (3) angeordnet und mit einem die Gegenverzahnung (8) aufweisenden, den Schieber (3) überbrückenden Steg (36) verbunden sind.

## Claims

1. Parking brake for motor vehicles, vehicle trailers or the like, with a releasable silent ratchet (41) for transmitting the adjusting force of the handbrake lever (40) to at least one control cable (1) leading to the wheel brake, the silent ratchet (41) having a slide (3), a pull element (2) with toothing (6) and a longitudinally moveable clamping element (7) with countertoothing (8), a setting device (42) bringing the toothings (6, 8) into engagement when the handbrake lever (40) is pulled, characterized in that the pull element (2) has, at least on one side, a toothing (6) co-operating with a clamping element (7) and, on the opposite side (9), a plane wall, by means of which said opposite side is guided on the confronting inner face (10) of the slide (3).

2. Parking brake according to Claim 1, characterized in that the clamping element (7) is guided on the slide (3) and is mounted so as to be longitudinally and transversely moveable.

3. Parking brake according to Claim 1 or 2, characterized in that the silent ratchet (41) has a release device (43) which moves the clamping element (7) away from the pull element (2).

4. Parking brake according to Claim 1, 2 or 3, characterized in that the clamping element (7) has a wedge-shaped wall thickening (11), the wedge face (12) of which bears on a matching counterwedge face (13) of the slide (3), the countertoothing (8) of the clamping element (7) being arranged in the edge region (14) facing away from the wedge face (12).

5. Parking brake according to Claim 4, characterized in that the countertoothing (8) of the clamping element (7) projects beyond the adjacent wall region (15).

6. Parking brake according to one of Claims 1 to 5, characterized in that the web (16) of the clamping element (7) has, at its end confronting the control cable (1), an angular extension (19) which engages behind the slide (3).

7. Parking brake according to Claim 6, characterized in that the slide (3) has arranged on it at least one compression spring (20) which has an active axis directed parallel to the rod-shaped pull element (2) and which acts on the extension (19).

8. Parking brake according to one of Claims 1 to 7, characterized in that the parking brake (39) has a fixed abutment (21), onto which the clamping element (7) butts when the brake is in the release position, the abutment point (22) being arranged between the pull element (2) and the compression spring (20).

9. Parking brake according to Claim 8, characterized in that the fixed abutment (21) has an elevation and/or the extension (19) has a bevel (45).

10. Parking brake according to one of Claims 1 to 9, characterized in that the clamping element (7) consists of metal, in particular of sintered metal.

11. Parking brake particularly according to Claim 1 or one of the following claims, characterized in that the clamping element (7) is designed as an angle lever (23) which, in the region of the transition (26) of its legs (24, 25), is mounted pivotably in the slide (3), its one leg end (27), which faces away from the control cable (1), having a countertoothing (8) projecting in the direction of the toothing (6) of the pull element (2), and its other leg end (28) projecting beyond the slide (3) and co-operating with the fixed abutment (21) in a position located at a distance from the axis of rotation (29) of the angle lever (23).

12. Parking brake according to Claim 11, characterized in that the angle lever (23) is mounted, via a long hole (30), on a bearing bolt (31) connected to the slide (3), the long hole (30) extending parallel to the pull element (2).

13. Parking brake according to one of Claims 11 and 12, characterized in that the leg end (27) carrying the countertoothing (8) and the adjacent region of the slide (3) have wedge-shaped or cup-shaped faces (32, 33) which bear on one another and the inclination of which is directed in such a way as to give rise, when the handbrake lever is pulled, to a force component assisting the engagement of the toothings (6, 8).

14. Parking brake according to one of Claims 11 to 13, characterized in that the leg end (27) carrying the countertoothing (8) is supported, via at least one compression spring (34), against a wall face (35) of the slide (3), said wall face being located at a distance from said leg end.

15. Parking brake according to one of Claims 11 to 14, characterized in that the angle lever (23) is of fork-shaped design, the legs (24, 25) of which are arranged on the outside of the slide (3) and are connected to a web (36) having the countertoothing (8) and bridging the slide (3).

## Revendications

1. Frein de stationnement pour véhicules automobiles, remorques de véhicules ou analogues, avec un dispositif d'encliquetage par serrage (41) pouvant être desserré pour la transmission de la force de réglage du levier de frein à main (40) à au moins un câble de transmission (1) menant à un frein de roue, le dispositif d'encliquetage par serrage (41) comportant un coulisseau (3), un élément de traction (2) avec denture (6) et un élément de serrage (7) mobile dans la direction longitudinale avec denture conjuguée (8), un dispositif de serrage (42) amenant les dentures (6, 8) en prise lors du serrage du levier de frein à main (40), **caractérisé** en ce que l'élément de traction (2) comporte, au moins sur un côté, une denture (6) coopérant avec un élément de serrage (7), et sur le côté (9) opposé, une paroi plane avec laquelle il est guidé sur la face intérieure (10) en vis-à-vis du coulisseau (3).

2. Frein de stationnement selon la revendication 1, **caractérisé** en ce que l'élément de serrage (7) est guidé sur le coulisseau (3) et est monté avec possibilité de déplacement dans les directions longitudinale et transversale.

3. Frein de stationnement selon la revendication 1 ou 2, **caractérisé** en ce que le dispositif d'encliquetage par serrage (41) comporte un dispositif de desserrage (43) qui dégage l'élément de serrage (7) de l'élément de traction (2).

4. Frein de stationnement selon la revendication 1, 2 ou 3, **caractérisé** en ce que l'élément de serrage (7) comporte un épaississement de paroi (11) en forme de clavette dont la surface cunéiforme (12) est appliquée contre une surface cunéiforme conjuguée (13) adaptée du coulisseau (3), la denture conjuguée (8) de l'élément de serrage (7) étant disposée dans la zone de bord (14) tournée à l'opposé de la surface cunéiforme (12).

5. Frein de stationnement selon la revendication 4, **caractérisé** en ce que la denture conjuguée (8) de l'élément de serrage (7) fait saillie de la zone de paroi (15) adjacente.

6. Frein de stationnement selon une des revendications 1 à 5, **caractérisé** en ce que la nervure (16) de l'élément de serrage (7) comporte, à son extrémité tournée vers le câble de transmission (1), un épaulement (19) angulaire qui maintient le coulisseau (3) par derrière.

7. Frein de stationnement selon la revendication 6, **caractérisé** en ce qu'au moins un ressort de pression (20) avec un axe d'action dirigé parallèlement à l'élément de traction (2) en forme de barre est disposé sur le coulisseau (3), lequel ressort agit sur l'épaulement (19).

8. Frein de stationnement selon une des revendications 1 à 7, **caractérisé** en ce que le frein de stationnement (39) comporte une butée (21) stationnaire contre laquelle est appliqué l'élément de serrage (7) lorsque le frein est desserré, le point de butée (22) étant disposé entre l'élément de traction (2) et le ressort de pression (20).

9. Frein de stationnement selon la revendication 8, **caractérisé** en ce que la butée (21) stationnaire comporte une saillie et/ou l'épaulement (19) un biseau (45).

10. Frein de stationnement selon une des revendications 1 à 9, **caractérisé** en ce que l'élément de serrage (7) est en métal, en particulier en métal fritté.

11. Frein de stationnement en particulier selon la revendication 1 ou une des suivantes, **caractérisé** en ce que l'élément de serrage (7) est réalisé sous la forme d'un levier coudé (23) qui est monté pivotant sur le coulisseau (3) dans la zone de la jonction (26) de ses bras (24, 25), l'extrémité (27) de l'un de ses bras, tournée à l'opposé du câble de transmission (1), comportant une denture conjuguée (8) faisant saillie dans la direction de la denture (6) de l'élément de traction (2) et l'extrémité (28) de son autre bras faisant saillie par rapport au coulisseau (3) et coopérant avec la butée (21) stationnaire, à distance de l'axe de rotation (29) du levier coudé (23).

12. Frein de stationnement selon la revendication 11, **caractérisé** en ce que le levier coudé (23) est monté par l'intermédiaire d'un trou oblong (30) sur un axe de montage (31) relié au coulisseau (3), le trou oblong (30) s'étendant parallèlement à l'élément de traction (2).

13. Frein de stationnement selon une des revendications 11 et 12, **caractérisé** en ce que l'extrémité de bras (27) portant la denture conjuguée (8) et la zone adjacente du coulisseau (3) présentent des surfaces (32, 33) en forme de clavette ou de poche qui sont en contact et dont l'inclinaison produit une composante de force qui soutient l'engagement des dentures (6, 8) lors du serrage du levier de frein à main.

14. Frein de stationnement selon une des revendications 11 à 13, **caractérisé** en ce que l'extrémité de bras (27) portant la denture conjuguée (8) prend appui, par l'intermédiaire d'au moins un ressort de pression (34), contre une surface de paroi (35) du coulisseau (3) située à distance.

15. Frein de stationnement selon une des revendications 11 à 14, **caractérisé** en ce que le levier coudé (23) a la forme d'une fourche dont les bras (24, 25) sons disposés sur le côté extérieur du coulisseau (3) et sont reliés à une aile (36) comportant la denture conjuguée (8) et surmontant le coulisseau (3).
